# FASCICULE DE BREVET EUROPEEN

(11) **EP 3 421 375 B1**
(45) Date de publication et mention de la délivrance du brevet: **14.08.2019**
(21) Numéro de dépôt: 18177682.4
(22) Date de dépôt: 14.06.2018
(51) Int. Cl.: B64D 45/00, F02C 7/25, A62C 3/08, G08B 25/14, G08B 29/16

(54) **DISPOSITIF DE SURVEILLANCE D'UNE TURBOMACHINE D'UN AERONEF**
ÜBERWACHUNGSSYSTEM EINES TURBOTRIEBWERKS EINES LUFTFAHRZEUGS
MONITORING SYSTEM OF AN AIRCRAFT TURBINE ENGINE

(30) Priorité: 29.06.2017 FR 1756040
(43) Date de publication de la demande: 02.01.2019
(73) Titulaire: Airbus Operations S.A.S., 31060 Toulouse (FR)
(72) Inventeur: BERT, Florence, 31700 BLAGNAC (FR); PILON, Antoine, 31470 SAINT LYS (FR)
(74) Mandataire: Gicquel, Olivier Yves Gérard

(56) Documents cités:
- EP-B1- 1 829 006
- DE-A1-102006 058 490
- US-A1- 2010 177 801
- US-A1- 2013 294 900
- US-A1- 2017 096 238

## Description

L'invention concerne un aéronef comprenant un dispositif de surveillance d'une turbomachine permettant d'informer l'équipage de l'aéronef de la survenue d'un incendie sur la turbomachine.

Une turbomachine d'un aéronef commercial comprend une pluralité de capteurs incendie connectés à un dispositif de surveillance (du type FDU pour fire detection unit : unité de détection d'incendie) configuré pour transmettre un message d'alerte incendie lors de la détection d'un incendie dans la turbomachine.

A la réception d'un message d'alerte incendie, l'équipage doit se détourner des actions de pilotage en cours pour se concentrer sur la mise en oeuvre de contre-mesures à l'incendie, comme par exemple déclencher des dispositifs anti-incendie ou réduire la poussée de la turbomachine.

De tels moyens pour détecter la survenue d'un incendie sur une turbomachine sont efficaces mais il existe de rares cas où l'équipage peut recevoir un message d'alerte incendie alors qu'aucun incendie n'est avéré.

Il existe un besoin d'assurer l'équipage que chaque message d'alerte incendie est révélateur d'un cas d'incendie concret sur une turbomachine de sorte que des contre-mesures ne soient pas mises en oeuvre inutilement.

Afin de répondre à ce besoin, et d'améliorer l'aide à la prise de décision pour s'assurer que les messages d'alerte incendie ne sont pas de fausses alertes, la demande de brevet US2010/0177801 décrit l'implémentation d'un réseau de capteurs incendie à forte densité de capteurs dans la turbomachine. Le dispositif de surveillance transmet un message d'alerte incendie uniquement si au moins deux capteurs incendie détectent un incendie.

L'invention est une alternative à l'invention décrite dans la demande susmentionnée.

A cet effet, l'invention concerne un aéronef comprenant au moins une turbomachine et un dispositif de surveillance associé à la turbomachine, la turbomachine étant reliée d'une part à une pluralité de circuits dont des circuits de fluides et des circuits électriques, et d'autre part à une pluralité de capteurs de surveillance de la turbomachine et de la pluralité de circuits, ladite pluralité de capteurs comprenant au moins un capteur incendie et des capteurs de surveillance des circuits de fluide, des capteurs de surveillance des circuits électriques ainsi que des capteurs de surveillance du fonctionnement de la turbomachine, le dispositif de surveillance étant relié à ladite pluralité de capteurs et comprend une unité centrale configurée pour générer un signal indicatif de la survenue d'un incendie sur la turbomachine uniquement si, un capteur incendie ainsi qu'un capteur de surveillance d'un circuit de fluide ou d'un circuit électrique ou du fonctionnement de la turbomachine émettent un signal indicatif d'une anomalie.

Grâce à l'invention, l'équipage est assuré que chaque message d'alerte incendie concerne bien un cas d'incendie réel de la turbomachine.

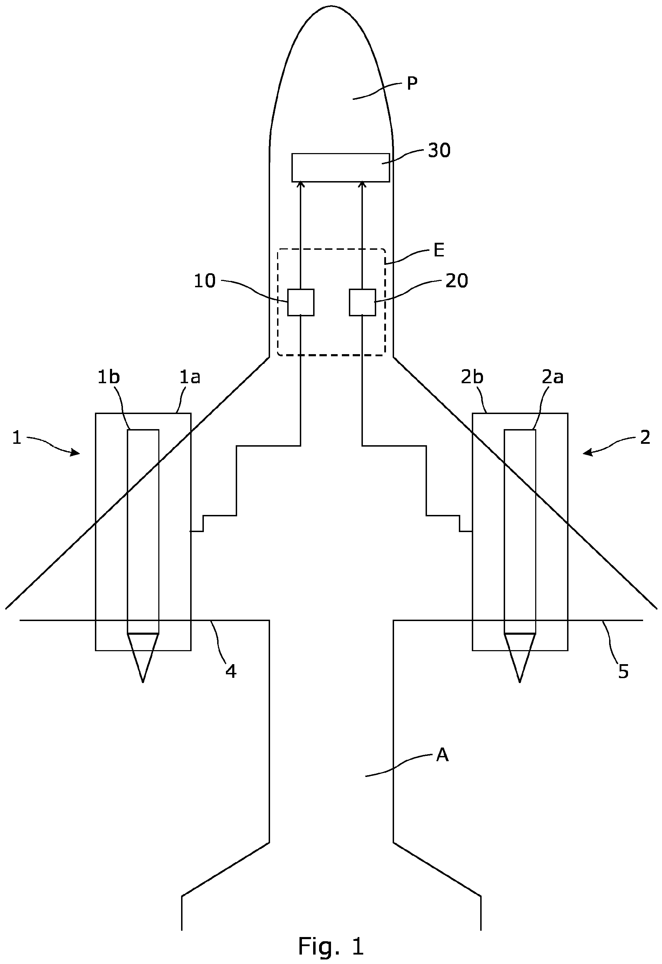

Les caractéristiques de l'invention mentionnées ci-dessus, ainsi que d'autres, apparaîtront à la lecture de la description suivante d'exemples de réalisation, ladite description étant faite en relation avec la figure 1 jointe:
- la figure 1 est une vue schématique d'un aéronef selon un mode de réalisation de l'invention, ledit aéronef comprenant deux turbomachines et un dispositif de surveillance associé à chaque turbomachine ;
- la figure 2 est une vue schématique d'un dispositif de surveillance de la figure 1 associé à une turbomachine selon un mode de réalisation de l'invention ; et
- la figure 3 est un schéma d'une logique de surveillance d'une turbomachine mise en oeuvre par un dispositif de surveillance de la figure 2.

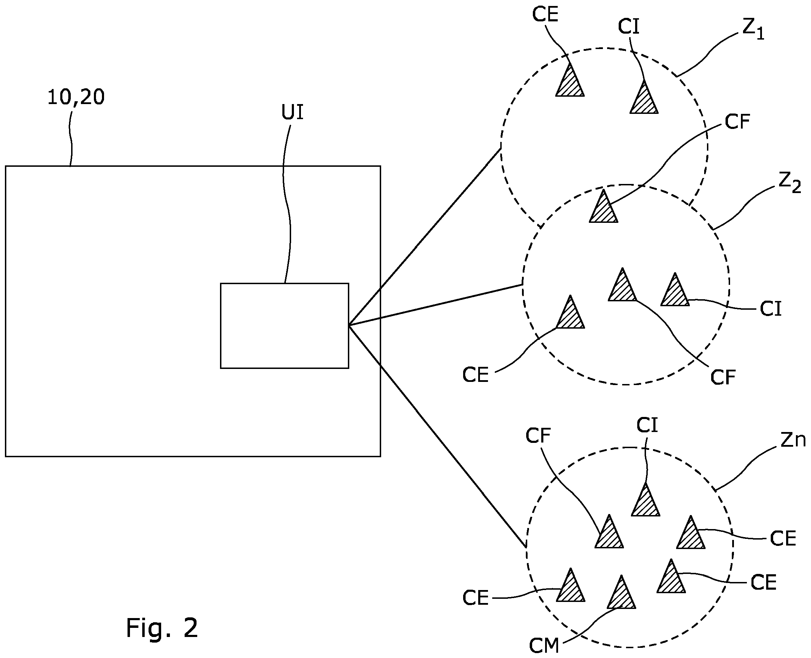

En référence avec la figure 1, l'aéronef A comprend deux turbomachines 1,2 qui sont, par exemple, chacune fixées sous une aile 4,5 de l'aéronef A. Chacune des turbomachines 1,2 comprend un moteur 1b, 2b entouré par une nacelle 1a,2a, et la turbomachine est reliée à une pluralité de circuits (non représentés) dont des circuits de fluides liquides, dits circuits de fluide (ATA28/29/30 : hydraulique, huile, carburant)) et des circuits électriques (ATA24) afin d'assurer le fonctionnement de la turbomachine, ainsi qu'à une pluralité de capteurs (voir figure 2) CE, CF, CI, CM de surveillance de la machine et des circuits pour surveiller le fonctionnement de la turbomachine. En particulier, chaque turbomachine comprend au moins un capteur incendie CI, une pluralité de capteurs de surveillance des circuits de fluide CF, une pluralité de capteurs de surveillance des circuits électriques CE et une pluralité de capteurs de surveillance du fonctionnement de la turbomachine CM.

De manière connue, chaque capteur CE, CF, CI, CM génère un signal indicatif d'une anomalie (selon le type de capteur : incendie, fuite de liquide, court-circuit/arc électrique, problème dans le fonctionnement de la turbomachine) lorsque le paramètre qu'il mesure dépasse une valeur seuil prédéterminée.

Selon l'invention, l'aéronef A comprend en outre, associé à chaque turbomachine 1,2, un dispositif de surveillance 10,20 de type FDU (pour fire detection unit : unité de détection d'incendie), reliée à la pluralité de capteurs CE, CF, CI, CM pour générer une alerte en cas de survenue d'un incendie sur la turbomachine 1,2. Les dispositifs de surveillance 10, 20 sont, par exemple, arrangés dans la baie avionique E de l'aéronef.

Le dispositif de surveillance 10,20 d'une turbomachine 1,2 met en oeuvre une logique visant, lorsqu'un capteur incendie CI émet un signal indicateur d'un incendie, à analyser l'environnement du capteur incendie pour vérifier qu'au moins un autre capteur parmi un capteur de surveillance d'un circuit de fluide CF ou d'un circuit électrique CE ou du fonctionnement de la turbomachine CM émet également un signal indicatif d'une anomalie, afin de s'assurer que le signal indicateur d'un incendie est justifié et doit être pris en compte par l'équipage.

L'aéronef A comprend enfin, un poste de pilotage P comprenant au moins un écran d'affichage 30 connecté aux dispositifs de surveillances 10,20. Chaque dispositif de surveillance 10,20 transmet des instructions d'affichage d'alerte incendie à l'écran d'affichage 30 lors de la détection d'un incendie sur la turbomachine 1,2.

Les circuits de fluide comprennent des organes comme des pompes, des vannes et des conduits pour le transfert de fluide et les capteurs de surveillances des circuits de fluide CF sont par exemple des capteurs de pression, débit... Les circuits électriques comprennent quant à eux des dispositifs électroniques et des câbles pour alimenter en énergie les différents éléments et circuits de la turbomachine. Les capteurs de surveillance des circuits électriques CE sont par exemple des capteurs de courant, de tension...

Les capteurs incendie CI sont par exemple du type à boucle de détection à gaz pour lequel la détection d'un incendie est effective lorsque la valeur de la température détectée par le capteur se trouve au-delà d'une valeur seuil prédéterminée.

Les capteurs de surveillance du fonctionnement de la turbomachine CM surveillent les paramètres du fonctionnement de la turbomachine (vibration, températures, vitesse, débit d'air...) et sont, par exemple, des capteurs de vibrations, de température, de vitesse de rotation, de débit...

En relation avec la figure 2, chaque dispositif de surveillance 10,20 d'une turbomachine comprend une unité centrale UI mettant en oeuvre la logique selon l'invention telle que détaillée supra.

Le signal de sortie de chaque capteur CI, CE, CF, CM comprend, par exemple, un bit mis à 0 lorsque la valeur mesurée par le capteur est comprise dans une plage de valeurs admissibles (inférieure à une valeur seuil prédéterminée), et mis à 1 sinon afin d'indiquer une anomalie (selon le type de capteur : incendie, fuite de liquide, court-circuit/arc électrique, problème dans le fonctionnement de la turbomachine).

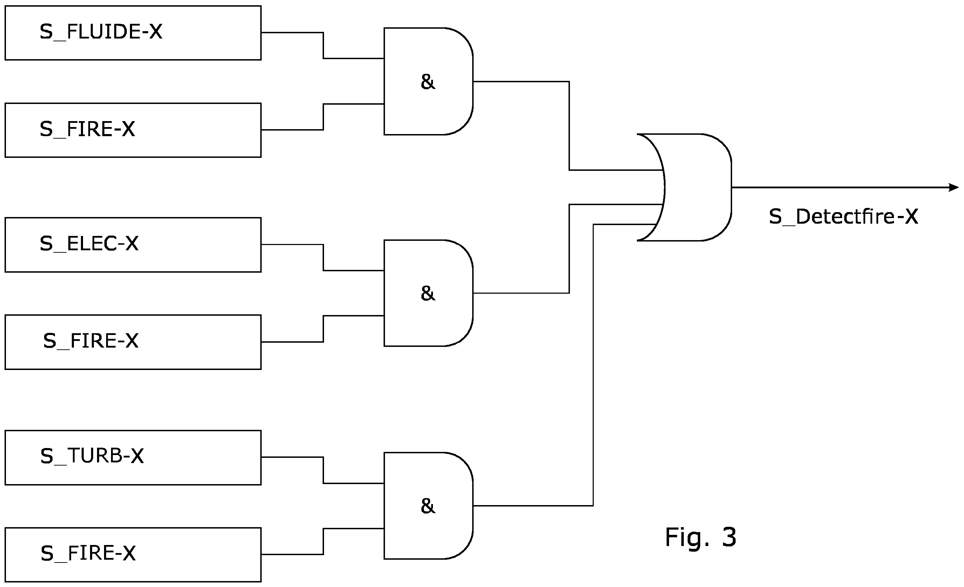

La logique mise en oeuvre par l'unité centrale UI est détaillée en figure 3 en considérant qu'un capteur incendie CI émet un signal de sortie S_FIRE-x, qu'un capteur dédié à la surveillance d'un circuit de fluide CF émet un signal de sortie S_FLUIDE-x, qu'un capteur dédiée à la surveillance d'un circuit électrique CE émet un signal de sortie S_ELEC-x, et qu'un capteur dédié à la surveillance du fonctionnement de la turbomachine CM émet un signal de sortie S_TURB-x.

Le signal de sortie S_{_}ELEC-x de chaque capteur dédié à un circuit électrique CE et reçu, avec le signal de sortie S_FIRE-x du capteur incendie CI, en entrée d'une porte logique ET, le signal de sortie S_FLUIDE-x de chaque capteur dédié à un circuit de fluide CF est reçu, avec le signal de sortie S_FIRE-x du capteur incendie CI, en entrée d'une porte logique ET, et le signal de sortie S_TURB-x de chaque capteur dédié à la surveillance du fonctionnement de la turbomachine CM est reçu, avec le signal de sortie S_FIRE-x du capteur incendie CI, en entrée d'une porte logique ET.

Le signal de sortie de chaque porte logique ET est mis à 1 si les deux signaux d'entrée sont mis à 1, c'est-à-dire pour chaque porte logique ET, si le capteur d'incendie CI et l'autre capteur CE, CF, CM détectent tous deux une anomalie.

Les signaux de sortie des portes logiques ET sont reçus en entrée d'une porte logique OU dont le signal de sortie S_Detectfire-x, indicatif d'un incendie, est mis à 1 si au moins un signal d'entrée de la porte logique OU est à 1.

Lorsque le signal S_Detectfire-x est mis à 1, l'unité centrale UI du dispositif de surveillance 10, 20 génère un signal d'instructions d'affichage d'alerte incendie S_Inst à destination de l'écran d'affichage 30 afin que ce dernier indique, via un message d'alerte, qu'un incendie s'est déclaré sur la turbomachine 1,2 associée au dispositif de surveillance 10, 20.

Contrairement à l'art antérieur où l'information d'un capteur incendie CI pouvait déclencher à elle seule l'affichage d'un message d'alerte incendie à destination de l'équipage, la logique selon l'invention confronte l'information du capteur incendie CI aux informations des autres capteurs CE, CF, CM dédiés à la surveillance des circuits de fluide, électrique ou du fonctionnement la turbomachine de sorte à afficher un message d'alerte incendie à destination de l'équipage qui a un degré de fiabilité élevé.

Par exemple :
- la détection d'un court circuit ou d'un arc, voire une fluctuation importante des paramètres électriques conjoints à la détection d'un incendie assurent avec certitude la présence d'un incendie dans la turbomachine 1,2 et que des contre-mesures urgentes doivent être mises en oeuvre par l'équipage pour juguler l'incendie ; ou
- la détection d'une grande fluctuation des paramètres de fonctionnement de la turbomachine, conjointe à la détection d'un incendie assurent avec certitude la présence d'un incendie dans la turbomachine 1,2, et que des contre-mesures urgentes doivent être mises en oeuvre par l'équipage pour juguler l'incendie ; ou
- la détection d'une fuite de liquide inflammable conjointe à la détection d'un incendie assurent avec certitude la présence d'un incendie dans la turbomachine 1,2 et que des contre-mesures urgentes doivent être mises en oeuvre par l'équipage pour stopper l'incendie.

De préférence, lorsque la turbomachine comprend une pluralité de capteurs incendie CI, la logique selon l'invention est déclinée de manière identique dans différents groupes de surveillance Z1, Z2,..Zn où chaque groupe est formé d'un unique capteur incendie CI associé à au moins un capteur de surveillance pris parmi un capteur de surveillance d'un circuit électrique CE, un capteur de surveillance du fonctionnement la turbomachine CM ou un capteur de surveillance d'un circuit fluide CF. On notera qu'un capteur incendie peut appartenir à plusieurs groupes de surveillances.

Par capteur de surveillance CE, CF,CM associé à un capteur incendie, on entend, par exemple, un capteur de surveillance associé arbitrairement au capteur incendie CI, ou qui est situé dans une même zone de confinement d'incendie de la turbomachine 1,2 que le capteur incendie CI ou bien dans une zone adjacente.

On notera que contrairement à la logique de l'art antérieur, dans la logique décrite ci-dessus, la rupture d'un conduit d'un circuit d'air (ATA30/36) de la turbomachine 1,2 transportant de l'air chaud (entraînant de ce fait une augmentation de la température au-delà du seuil à partir duquel le signal de sortie d'un capteur incendie CI soumis au flux d'air chaud est mis à 1) ne déclenche pas l'affichage d'un message d'alerte incendie dans le poste de pilotage P.

La logique permet donc d'éviter à l'équipage de devoir mettre en oeuvre des contre-mesures à l'incendie dans un tel cas de rupture de conduit d'air chaud. L'équipage pourra ainsi, à la place de la mise en oeuvre de contre-mesures à l'incendie, se contenter d'appliquer des mesures nécessaires pour juguler la fuite d'air chaud.

L'invention a été décrite à titre d'exemple pour la détection d'un incendie sur une turbomachine fixée sous une aile d'un aéronef. La même invention pourrait s'appliquer sur une turbomachine fixée au fuselage d'un aéronef, ou comme par exemple à une unité de puissance auxiliaire (APU : auxiliary power unit) montée dans le fuselage d'un aéronef.

## Revendications

1. Aéronef (A) comprenant au moins une turbomachine (1,2) et un dispositif de surveillance (10,20) associé à la turbomachine, la turbomachine (1,2) étant reliée d'une part à une pluralité de circuits dont des circuits de fluides et des circuits électriques, et d'autre part à une pluralité de capteurs de surveillance (CE, CF, CI,CM) de la turbomachine et de la pluralité de circuits, ladite pluralité de capteurs comprenant au moins un capteur incendie (CI) et des capteurs de surveillance des circuits de fluide (CF), des capteurs de surveillance des circuits électriques (CE) ainsi que des capteurs de surveillance du fonctionnement de la turbomachine (CM)
**caractérisé en ce que** le dispositif de surveillance (10,20) est relié à ladite pluralité de capteurs et comprend une unité centrale (UI) configurée pour générer un signal (S_Detectfire-x) indicatif de la survenue d'un incendie sur la turbomachine uniquement si, un capteur incendie (CI) ainsi qu'un capteur de surveillance d'un circuit de fluide (CF) ou d'un circuit électrique (CE) ou du fonctionnement de la turbomachine (CM) émettent un signal (S_FIRE-x, S_FLUIDE-x, S_ELEC-x, S_TURB-x) indicatif d'une anomalie.

2. Aéronef (A) selon la revendication 1, l'aéronef comprend une pluralité de capteurs incendie (CI), **caractérisé en ce que** chaque capteur incendie (CI) est associé à au moins un capteur de surveillance d'un circuit de fluide (CF) ou d'un circuit électrique (CE) ou du fonctionnement de la turbomachine (CM), un capteur incendie (CI) et le au moins un capteur de surveillance (CE, CF, CM) associé audit capteur incendie (CI) formant un groupe de surveillance (Z1, Z2,...,Zn), l'unité centrale (UI) est configurée pour générer un signal (S_Detectfire-x) indicatif de la survenue d'un incendie sur la turbomachine si, pour un groupe de surveillance, le capteur incendie (CI) et au moins un capteur de surveillance (CE, CF, CM) associé audit capteur incendie (CI) émettent un signal (S_FIRE-x, S_FLUIDE-x, S_ELEC-x, S_TURB-x) indicatif d'une anomalie.

3. Aéronef (A) selon l'une quelconque des revendications 1 à 2, l'aéronef comprenant un poste de pilotage (P) dans lequel est arrangé un écran d'affichage (30), **caractérisé en ce que** l'unité centrale (UI) est configurée pour transmettre un signal d'instructions d'affichage d'alerte incendie à l'écran d'affichage (30) lorsqu'un signal (S_Detectfire-x) indicatif de la survenue d'un incendie sur la turbomachine (1, 2) est généré.

## Patentansprüche

1. Luftfahrzeug (A), umfassend mindestens ein Turbotriebwerk (1, 2) und eine dem Turbotriebwerk zugeordnete Überwachungsvorrichtung (10, 20), wobei das Turbotriebwerk (1, 2) einerseits mit einer Vielzahl von Kreisen, darunter Fluidkreise und elektrische Kreise, und andererseits mit einer Vielzahl von Überwachungssensoren (CE, CF, CI, CM) für das Turbotriebwerk und die Vielzahl von Kreisen verbunden ist, wobei die Vielzahl von Sensoren einen Brandsensor (CI) und Überwachungssensoren für die Fluidkreise (CF), Überwachungssensoren für die elektrischen Kreise (CE) sowie Überwachungssensoren für den Betrieb des Turbotriebwerks (CM) umfassen,
**dadurch gekennzeichnet, dass** die Überwachungsvorrichtung (10, 20) mit der Vielzahl von Sensoren verbunden ist und eine Zentraleinheit (UI) umfasst, die dazu konfiguriert ist, ein Signal (S_Detectfire-x), das auf das Eintreten eines Brandes am Turbotriebwerk hindeutet, nur dann zu erzeugen, wenn ein Brandsensor (CI) sowie ein Überwachungssensor für einen Fluidkreis (CF) oder einen elektrischen Kreis (CE) oder den Betrieb des Turbotriebwerks (CM) ein Signal (S_FIRE-x, S_FLUIDE-x, S_ELEC-x, S_TURB-x), das auf eine Anomalie hindeutet, aussenden.

2. Luftfahrzeug (A) nach Anspruch 1, wobei das Luftfahrzeug eine Vielzahl von Brandsensoren (CI) umfasst, **dadurch gekennzeichnet, dass** jeder Brandsensor (CI) mindestens einem Überwachungssensor für einen Fluidkreis (CF) oder einen elektrischen Kreis (CE) oder den Betrieb des Turbotriebwerks (CM) zugeordnet ist, wobei ein Brandsensor (CI) und der mindestens eine dem Brandsensor (CI) zugeordnete Überwachungssensor (CE, CF, CM) eine Überwachungsgruppe (Z1, Z2, ..., Zn) bilden, wobei die Zentraleinheit (UI) dazu konfiguriert ist, ein Signal (S_Detectfire-x), das auf das Eintreten eines Brandes am Turbotriebwerk hindeutet, zu erzeugen, wenn bei einer Überwachungsgruppe der Brandsensor (CI) und mindestens ein dem Brandsensor (CI) zugeordneter Überwachungssensor (CE, CF, CM) ein Signal (S_FIRE-x, S_FLUIDE-x, S_ELEC-x, S_TURB-x), das auf eine Anomalie hindeutet, aussenden.

3. Luftfahrzeug (A) nach einem der Ansprüche 1 bis 2, wobei das Luftfahrzeug ein Cockpit (P) umfasst, in dem ein Anzeigebildschirm (30) angeordnet ist, **dadurch gekennzeichnet, dass** die Zentraleinheit (UI) dazu konfiguriert ist, ein Signal mit Anweisungen zum Anzeigen eines Brandalarms zum Anzeigebildschirm (30) zu übertragen, wenn ein Signal (S_Detectfire-x), das auf das Eintreten eines Brandes am Turbotriebwerk (1, 2) hindeutet, erzeugt wird.

## Claims

1. Aircraft (A) comprising at least one turbine engine (1, 2) and a monitoring device (10, 20) associated with the turbine engine, the turbine engine (1, 2) being linked firstly to a plurality of circuits including fluid circuits and electric circuits, and secondly to a plurality of sensors (CE, CF, CI, CM) for monitoring the turbine engine and the plurality of circuits, said plurality of sensors comprising at least one fire sensor (CI) and sensors for monitoring the fluid circuits (CF), sensors for monitoring the electric circuits (CE) and sensors for monitoring the operation of the turbine engine (CM)
**characterized in that** the monitoring device (10, 20) is linked to said plurality of sensors and comprises a central processing unit (UI) configured to generate a signal (S_Detectfire-x) indicating the occurrence of a fire on the turbine engine only if a fire sensor (CI) and a sensor for monitoring a fluid circuit (CF) or an electric circuit (CE) or the operation of the turbine engine (CM) transmit a signal (S_FIRE-x, S_FLUID-x, S_ELEC-x, S_TURB-x) indicating an anomaly.

2. Aircraft (A) according to Claim 1, the aircraft comprising a plurality of fire sensors (CI), **characterized in that** each fire sensor (CI) is associated with at least one sensor for monitoring a fluid circuit (CF) or an electric circuit (CE) or the operation of the turbine engine (CM), a fire sensor (CI) and the at least one monitoring sensor (CE, CF, CM) associated with said fire sensor (CI) forming a monitoring group (Z1, Z2,..., Zn), the central processing unit (UI) being configured to generate a signal (S_Detectfire-x) indicating the occurrence of a fire on the turbine engine if, for a monitoring group, the fire sensor (CI) and at least one monitoring sensor (CE, CF, CM) associated with said fire sensor (CI) transmit a signal (S_FIRE-x, S_FLUID-x, S_ELEC-x, S_TURB-x) indicating an anomaly.

3. Aircraft (A) according to any one of Claims 1-2, the aircraft comprising a cockpit (P) in which a display screen (30) is arranged, **characterized in that** the central processing unit (UI) is configured to send a fire warning display instruction signal to the display screen (30) when a signal (S_Detectfire-x) indicating the occurrence of a fire on the turbine engine (1, 2) is generated.
